Europäisches Patentamt

European Patent Office

Office européen des brevets

(11) Publication number: **0 058 275**
**A1**

## EUROPEAN PATENT APPLICATION

(21) Application number: 81305254.5

(22) Date of filing: 05.11.81

(51) Int. Cl.³: **A 61 M 1/03**
**B 01 D 13/00, B 01 D 31/00**

(30) Priority: 17.02.81 JP 21055/81
21.08.81 JP 123616/81

(43) Date of publication of application:
25.08.82 Bulletin 82/34

(84) Designated Contracting States:
DE FR GB IT

(71) Applicant: SENKO MEDICAL INSTRUMENTS Mfg Co.,
LTD
No: 23-13, Hongo 3-Chome
Bunkyo-ku Tokyo(JP)

(72) Inventor: Nakanishi, Hikaru
Asodai Danchi 5-404 No: 861-2 Shimoaso Tama-ku
Kawasaki-shi Kanagawa-ken(JP)

(74) Representative: Loven, Keith James et al,
Eric Potter & Clarkson 14 Oxford Street
Nottingham NG1 5BP(GB)

(54) Hollow fiber artificial kidney.

(57) A hollow-fibre artificial kidney comprising a shell (3) in which a plurality of hollow fibres (1) are accomodated, and a pair of cover members or lids (23) for attaining a communication with the blood flowing through each hollow fibre and fluid tightly covering the shell. The cover members (23) are welded so as to be coupled to the shell, preferably by ultrasonic welding. In addition, a groove (27) is formed within each cover member in which a sealing material (28,30) is put to further avoid a contact of the blood with air.

Fig. 3

-1-

## HOLLOW FIBER ARTIFICIAL KIDNEY

1. Field of the Invention

This invention relates to hollow fiber artificial kidneys and, more particularly to an improvement in fabricating hollow fiber artificial kidneys which performs hemodialysis with substantially no potential risk for the blood to come in contact with air.

2. Description of the Prior Art

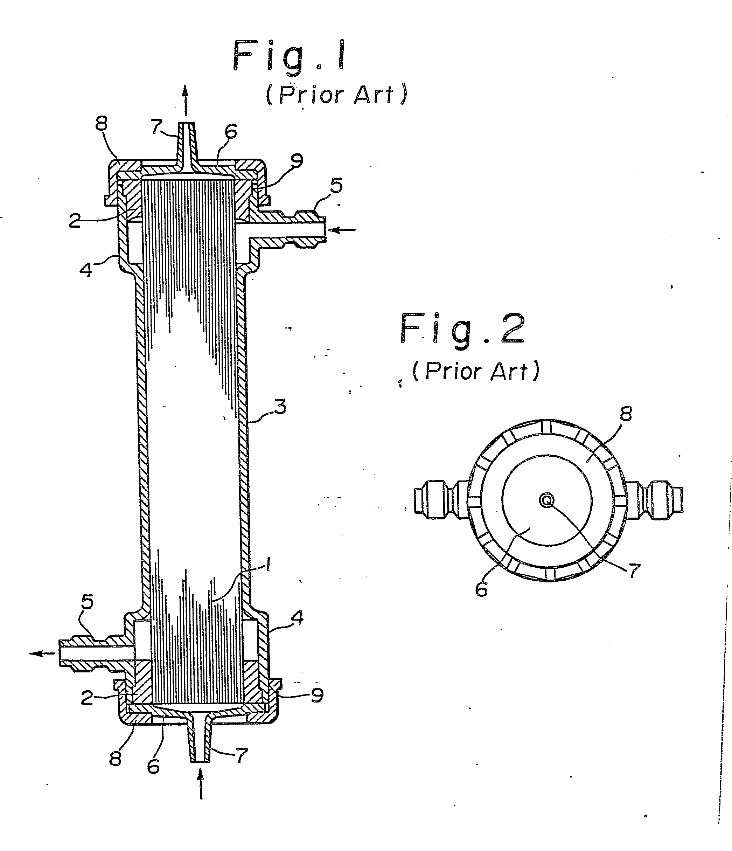

A typical hollow fiber artificial kidney commonly known in the art is shown in Figs. 1 and 2. In the Figs., a plurality of hollow fibers 1 are bundled together and potted at each end in headers 2,2 such that the fibers 1 secured at the both ends in headers 2,2 are accommodated within a cylindrical shell 3. The hollow fiber is made froɪ such as cellulose based material and has a wall thickness of 16μ and an inner diameter of 215μ. The headers 2,2 are made from a hardened resin such as silicone or polyuret while the shell 3 is made from transparent material such as

-2-

polycarbonate. The cylindrical shell 3 has diametrically enlarged portions 4,4 adjacent the both ends where dialysate inlet and outlet ports 5,5 are integrally formed to permit the introduction and withdrawing of the dialysate solution substantially peripherally to the hollow fibers 1 within the shell 3. After potting the fibers 1 in the headers 2 which are also fixedly held in a liquid tight manner to the interior of the shell 3 at the enlarged portion 4, the surface of the fibers 1, headers 2 and bottom and top edges of the shell 3 are made flush with one another.

There are provided lids 6,6 at the both ends of the cylindrical shell 3 where the interior of the hollow fibers 1 are exposed or faced open, blood outlet and inlet ports 7,7 being formed centrally of the lids 6,6 in order to permit entry of blood into the interior of the hollow fibers 1 and to enable the withdrawal of the blood after dialysis. The lids 6 are tightly abutted at its peripheral portion onto the surface of the headers 2 and bottom and top edges of the shell 3 in a fluid tight manner. The lids 6 are secured to the shell 3 and headers 2 by covers 8 which are tightened with threads 9 formed both at the outer surface of the shell 3 and the inner surface of the covers 8, respectively.

These conventional hollow fiber artificial kidneys have been found not entirely satisfactory, however, in that, since the lids 6,6 lying upon the flush surface of the headers 2,2 and top and bottom edges of the shell 3 are tightened with threads 9 formed on the both interior and exterior surfaces of the respective covers 8 and shells 3, forces imparted on the threads 9 may loosen the tightness between the lids 7 and the flush surface of the headers 2, and top and bottom edges of the shell 3 thus resulting in a leakage of the blood and in a contact with air which causes a potential infection.

It is therefore a principal object to provide a holl fiber artificial kidney whose construction substantially eliminates a leakage of blood and a contact with air thus avoiding a hazardous infection.

Briefly, a hollow fiber artificial kidney according to the invention comprises a shell in which a plurality c hollow fibers are accommodated, and a pair of cover membe or lids for attaining a communication with the blood flo through each hollow fiber and fluid tightly covering the shell. The cover members are welded to couple with the shell, in a preferred embodiment, by ultrasonic welding. In addition, a groove is formed within the respective co members in which a sealing material is fitted further to avoid a contact of the blood with air.

More in particular, a hollow fiber artificial kidne of the invention is characterised in that the cover memb are comprised of external depending walls integrally for at the peripheral edges thereof for being coupled with t end portions of the shell and internal depending walls

-4-

parallel to and spaced apart from the external depending walls extending toward the top edges of the headers and being substantially in contact therewith thereby forming grooves between the external and internal walls, sealing members are provided which are fitted within the grooves, and the inner surfaces of the external walls are coupled with the both end portions of the shell be means of welding. The sealing members prevents the blood in head chambers, defined between the blood inlet and outlet ports and the tips of the hollow fibers, from communicating with air through the welded portions between the external walls and the end portion of the shell. The sealing members may preferably be O-rings or other suitable material such as polyurethane. Thus, in a hollow fiber artificial kidney of the invention provided is a twofold preventive measure for a contact of blood with air which is constituted by the welded portions between the cover members and the shell, and the sealing members fitted within the grooves. According to the invention the hollow fiber artificial kidney thus constructed is free from any potential hazards which might have been caused by a contact of blood with air.

Many other advantages and features of the present invention will become manifest to those versed in the art upon making reference to the detailed description and the accompanying sheets of drawings in which preferred structual embodiments of the present invention are shown by way of example.

Fig. 1 is an elevational view in section of a hollow fiber artificial kidney according to the prior art;

Fig. 2 is a plan view of the hollow fiber artificial kidney seen in Fig. 1;

Fig. 3 is an elevational view in section of a first embodiment of a hollow fiber artificial kidney according to the invention;

Fig. 4 is a fragmentary elevational view, on an enlarged scale, of a portion of the hollow fiber artificial kidney seen in Fig. 3;

Fig. 5 is an elevational view in section of a second embodiment of a hollow fiber artificial kidney according to the invention; and

Fig. 6 is a fragmentary elevational view, on an enlarged scale, of a portion of the hollow fiber artificial kidney seen in Fig. 5.

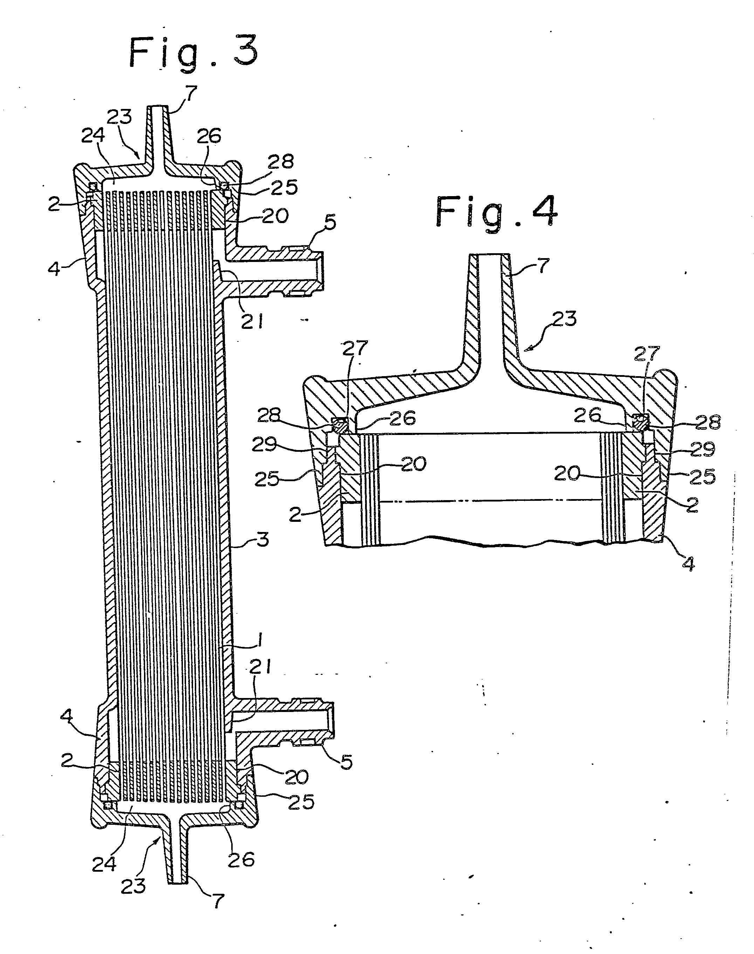

Referring to Figs. 3 and 4, a first embodiment of a hollow fiber artificial kidney according to the present invention is shown in which identical reference numerals with those in Figs. 1 and 2 designate like or correspondin parts throughout and the description thereof is omitted for the purpose of brevity. In this embodiment, a shell 3 generally of a cylindrical shape is formed to have diametrically enlarged portions 4 at the both ends and headers 2 are fixedly connected to the outward portion, away from the middle of the shell 3, of the diametrically enlarged portion 4 to form joints indicated at 20 between the outer surfaces of the headers 2 and the inner surfaces of the shell 3. There are provided buffle plates 21 respectively at the bases of dialysate inlet and outlet ports 5 which are formed integrally with the shell 3 and located inwardly toward the middle of the shell 3 adjacent to the joints 20. The buffle plates 21 deflect dialysate solution so as to spread it uniformly throughout the hollow fibers 1.

In the first embodiment of the invention, cover members generally designated at 23 are coupled with the end portions of the shell 3 and have blood inlet and outlet ports 7 formed centrally thereof. The cover members 23 define header chambers 24 between the blood inlet and outlet ports 7 and the tips of the hollow fibers 1 for diverging the blood to be dialysed toward the hollow fibers 1 and converging the blood dialysed into the blood outlet port 7. The cover members 23 are comprised of external depending walls 25 integrally formed at the peripheral edges thereof for coupling with the end portions of the shell 3, and internal depending walls 26. The internal depending walls 26 are formed such that they are parallel to and spaced apart from the external depending walls 25 and extend toward the top edges of the headers 2 so as to be substantially in contact with the top edges. Thus, grooves 27 are formed between the external and internal depending walls 25 and 26.

It is to be noted in this embodiment that the inner surfaces of the external depending walls 25 are coupled with the end portions of the shell 3 by means of welding, preferably by ultrasonic welding. The inner surfaces of the external depending walls 25 and the end portions of the shell 3 are formed substantially in a stepwise manner as shown in the drawings for securing them in position. Sealing members made of O-rings 28 are provided within the grooves 27 for preventing the blood in the header chambers 24 from communicating with air through the welded portions 29 between the external depending walls 25 and the end portion of the shell 3.

As apparent from the above description, the embodiment of the hollow fiber artificial kidney is provided a twofold preventive measure for a contact of the blood with air which is attained by the provision of the welded portions 29 between the cover members 23 and the shell 3, and in addition the sealing member, i.e., O-rings 28 fitted within the grooves 27. Consequently, any potential hazards are prevented from occurring which might have been caused by a contact of blood with air.

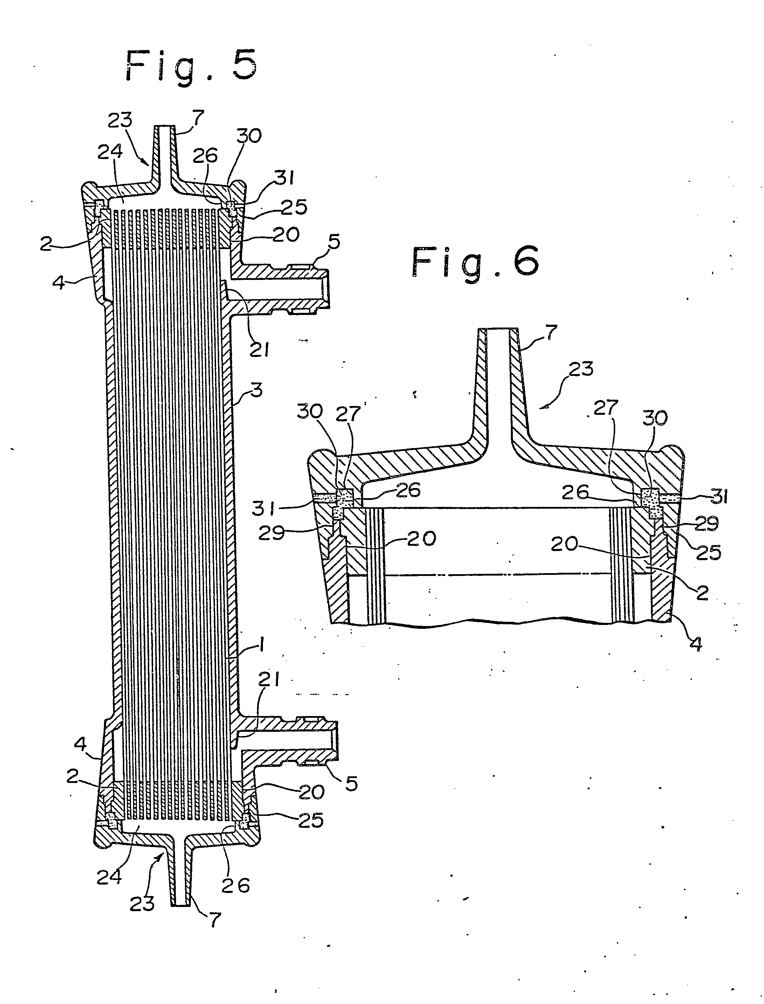

Referring now to Figs. 5 and 6, a further modification of the present invention is shown in which identical reference numerals with those in Figs. 1 to 4 designate like or corresponding parts throughout. The differences between the first embodiment and this modification reside only in that O-rings 27 in Figs. 3 and 4 are removed from the grooves 27 and instead sealing material such as polyurethane 30 is filled within the entire space of the grooves 27. A pair of injection hole and air evacuating hole 31 are formed on the external depending walls 25, both of which are located diametrically opposite to each other and in communication with the grooves 27, the former serving as inlet for sealing material and the latter serving as outlet for air for avoiding the formation of voids within the sealing material. Since the shell 3 and the covering members 23 are made of polycarbonate, it is preferable to use the same material in filling the holes 31 after hardening the sealing material 30.

In this second embodiment, it is readily understood that the same effect is attained as in the first embodiment in Figs. 3 and 4. Thus a leakage of the blood and hence a contact of the blood with air is fully eliminated thus assuring the hollow fiber artificial kidney entirely free of potential blood infection.

CLAIMS

1.    A hollow fiber artificial kidney comprising a plurality of hollow fibers (1) for passing therethrough blood to be dialysed, both end portions of the hollow fibers being bundled together to be potted in respective headers (2), a shell (3) with both end portions thereof diametrically enlarged for accommodating within the inner  space thereof  the hollow fibers potted in the header and for fixedly connecting  the headers in a fluid tight manner to the outward portion, away from the middle of the shell, of the diametrically enlarged portion to form a joint (20) between the outer surface of the header and the inner surface of the shell, dialysate inlet and outlet ports (3) being formed integrally with the shel and located  inwardly toward the middle of the shell adjac to the joint, and cover members (23) coupled with the end portions of the shell and having blood inlet and outlet ports (7) formed  centrally thereof and defining header chambers (24) between the blood inlet and outlet ports an the tips of the hollow fibers for divering the blood to b dialysed toward the hollow fibers and converging the bloc dialysed into the outlet port, characterised in that said cover members (23) are comprised of external depending walls (25) integrally formed at the peripheral edges the for being coupled with the end portions of said shell (3 and internal depending walls (26) parallel to and spaced apart from said external depending walls (25) extending toward the top edges of said headers (2) and being substantially in contact therewith thereby forming groov (27) between said external and internal walls , sealing members (28, 30) are provided which are fitted within sa grooves (27), and the inner surfaces of said external w are coupled with the both end portions of said shell by means of welding, sais sealing members (28, 30) prevent the blood in said header chambers (24) from communicati with air through said welded portions between said exte walls and the end portions of said shell.

-10-

2.    A hollow fiber artificial kidney according to Claim 1, characterised in that said sealing members are O-rings (28).

3.    A hollow fiber artificial kidney according to Claim 1, characterised in that said sealing members (30) fill the entire space of said grooves (27) in a fluid-tight manner so as to seal said welded portions.

4.    A hollow fiber artificial kidney according to Claim 3, characterised in that said external depending walls (25) have respectively an injection hole (31) and an air evacuating hole (31) therethrough.

5.    A hollow fiber artificial kidney according to any preceding claim characterised  in that said welded portions between said external walls (25)  and the end portions of said shell (3)  are formed substantially in a stepwise manner for securing said external walls and the end portions of said shell in position.

# Fig. 1
(Prior Art)

# Fig. 2
(Prior Art)

## Fig.3

## Fig.4

# Fig. 5

# Fig. 6

0058275

European Patent Office

EUROPEAN SEARCH REPORT

Application number

EP 81 30 5254

## DOCUMENTS CONSIDERED TO BE RELEVANT

| Category | Citation of document with indication, where appropriate, of relevant passages | Relevant to claim |
|---|---|---|
| | <u>US - A - 3 882 024</u> (DOW)<br>  * The whole document, in particular figure 4 * | 1,2 |
| | <u>DE - A - 2 827 256</u> (ASAHI)<br>  * Figure 1, page 16, lines 12, 13 *<br>& US - A - 4 212 744 | 1,2 |
| | <u>DE. - A - 3 023 681</u> (BAXTER)<br>  * Figure 3; page 14, lines 12-18; page 15, lines 24-29 *<br>& GB - A - 2 053 725 | 1,3,4 |
| A | <u>FR - A - 2 224 173</u> (EXTRA CORPOREAL) 1<br>  * Page 4, lines 14,15 * | |

**CLASSIFICATION OF THE APPLICATION (Int. Cl.³)**

A 61 M  1/03
B 01 D 13/00
       31/00

**TECHNICAL FIELDS SEARCHED (Int. Cl.³)**

A 61 M

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-12-1981 | PETZUCH |

EPO Form 1503.1  06.78